# EUROPÄISCHE PATENTSCHRIFT

(11) **EP 2 581 161 B1**
(45) Veröffentlichungstag und Bekanntmachung des Hinweises auf die Patenterteilung: **18.04.2018**
(21) Anmeldenummer: 12006497.7
(22) Anmeldetag: 17.09.2012
(51) Int. Cl.: B23F 23/12, B23F 21/02, B24B 53/075

(54) **Verfahren zum Abrichten einer mehrgängigen Schleifschnecke und zum Schleifen sowie Schleifschnecke**
Method for dressing a multi-thread grinding worm and a method for grinding and a grinding worm
Procédé d'ajustement d'une hélice de meulage à plusieurs vitesses et de meulage ainsi qu'hélice de meulage

(30) Priorität: 11.10.2011 DE 102011115526
(43) Veröffentlichungstag der Anmeldung: 17.04.2013
(73) Patentinhaber: Kapp GmbH, 96450 Coburg (DE); NILES Werkzeugmaschinen GmbH, 12681 Berlin (DE)
(72) Erfinder: Mueller, Frank, 96484 Meeder (DE)
(74) Vertreter: Gosdin, Michael

(56) Entgegenhaltungen:
- JP-A- S53 113 398
- US-A- 3 892 022
- US-A- 5 738 569

## Beschreibung

Die Erfindung betrifft ein Verfahren zum Abrichten einer mehrgängigen Schleifschnecke, bei dem mittels eines Abrichtwerkzeugs die Flankenkontur der wendelförmig parallel nebeneinander verlaufenden Schneckengänge hergestellt wird. Des weiteren betrifft die Erfindung ein Verfahren zum Schleifen eines Werkstücks und eine Schleifschnecke.

Beim Schleifen von Verzahnungen und ähnlichen Werkstücken mit einer Schleifschnecke, d. h. im Abwälz-Schleifverfahren, ist es erforderlich, vor dem Schleifen die Schnecke abzurichten, d. h. die Flankenkontur der Schneckengänge zu profilieren. Hierfür kann ein Diamant-Abrichtrad eingesetzt werden, das NC-gesteuert die Flankenkontur abfährt und so das benötigte Profil herstellt. Möglich ist hier das sog. topologische Abrichten, wie es beispielsweise in der DE 10 2007 020 479 B4 beschrieben ist. Die Flankenkontur des Schneckengangs wird hier quasi punktweise bzw. linienweise erzeugt, wobei in einer Anzahl radialer Zustellungen zwischen Schleifschnecke und Abrichtrad das Flankenprofil aufgebaut wird.

Ähnliche Lösungen sind aus der DE 695 26 851 T2 und aus der DE 10 2009 021 578 A1 bekannt.

Möglich ist auch ein Vollformabrichten, bei dem ein profiliertes Abrichtwerkzeug in den Schneckengang eintaucht und dabei seine Form den Flanken des Schneckengangs aufgibt.

Kommt eine mehrgängige Schleifschnecke zum Einsatz, bei der also mehrere Schneckengänge wendelförmig parallel zueinander verlaufen, wird der Abrichtprozess für jeden der Schneckengänge nacheinander durchgeführt. Nachdem ein Schneckengang abgerichtet ist, wird "geteilt" und das Abrichten für den nächsten Schneckengang wiederholt, bis auf diese Weise alle Schneckengänge abgerichtet sind. Die Folge ist, dass alle Schneckengänge bzw. die Flankenkonturen der Schneckengänge sowohl hinsichtlich ihrer Geometrie als auch bezüglich ihrer Oberflächenstruktur gleich abgerichtet bzw. ausgebildet sind. Angestrebt wird dabei, dass das Profil der Flankenkontur möglich in allen Schneckengängen gleich ist.

Wird insbesondere beim topologischen Abrichten die Flankenkontur punktweise bzw. linienweise aufgebaut, muss das Abrichtwerkzeug in den einzelnen "Zeilen" eine hinreichende Überdeckung aufweisen, um das Profil mit hoher Genauigkeit auf der Flanke abzubilden. Hierfür werden nur kleine radiale Inkremente von Zeile zu Zeile gewählt, was zwar eine genaue Kontur sicherstellt, aber relativ zeitaufwändig ist. Die Abrichtzeiten beim topologischen Abrichten sind also aufgrund hoher Überdeckungsgrade entsprechend lang, wenn eine hinreichende Schleifqualität angestrebt bzw. erreicht werden muss. Die Anzahl der Abrichthübe pro Gang muss also hinreichend groß gewählt werden, was zeitintensiv ist.

Der Erfindung liegt daher die Aufgabe zugrunde, ein gattungsgemäßes Verfahren zum Abrichten einer Schleifschnecke so fortzubilden, dass mit geringerem zeitlichen Aufwand ein gleich gutes Schleifergebnis erreicht werden kann bzw. dass mit dem gleichen zeitlichen Aufwand ein besseres Schleifergebnis erzielbar ist. Hierfür soll auch ein entsprechendes Schleifverfahren und eine entsprechende Schleifschnecke vorgeschlagen werden.

Die Lösung dieser Aufgabe durch die Erfindung ist bei einem Verfahren zum Abrichten einer mehrgängigen Schleifschnecke dadurch gekennzeichnet, dass in mindestens zwei Schneckengängen Flankenkonturen hergestellt werden, die sich geometrisch und/oder in ihrer Oberflächenstruktur voneinander unterscheiden, wobei das Abrichten mit einem Abrichtwerkzeug durchgeführt wird, dessen Schneidbereich sich nur über einen Teil der gesamten radialen Höhe der Flankenkontur erstreckt - d. h. mittels topologischem Abrichten -, wobei die gesamte Flankenkontur in mehreren Abricht-Teilvorgängen hergestellt wird, mit denen jeweils unterschiedliche radiale Abschnitte der Flankenkontur hergestellt werden, wobei die einzelnen radialen Abschnitte in mindestens zwei Schneckengängen radial versetzt zueinander angeordnet werden.

Im Unterschied zum Stand der Technik wird also vorgesehen, dass sich die Geometrien der Flankenkonturen der einzelnen Schneckengänge gezielt voneinander unterscheiden bzw. Unterschiede hinsichtlich der Oberflächenstruktur vorhanden sind.

Bevorzugt werden dabei in allen Schneckengängen Flankenkonturen hergestellt, die sich geometrisch und/oder in ihrer Oberflächenstruktur voneinander unterscheiden.

Ein Abricht-Teilvorgang erfolgt dabei bevorzugt so, dass bei konstantem radialen Abstand zwischen Schleifschnecke und Abrichtwerkzeug eine relative axiale Bewegung zwischen Schleifschnecke und Abrichtwerkzeug gefahren wird.

Der radiale Versatz zwischen den einzelnen radialen Abschnitten in den einzelnen Schneckengängen ist dabei bevorzugt äquidistant verteilt.

Das Abrichten erfolgt bevorzugt unter Verwendung eines scheibenförmigen Abrichtwerkzeugs, das während des Abrichtvorgangs um eine Drehachse rotiert.

In diesem Falle kann gemäß einer speziellen Ausgestaltung des vorgeschlagenen Verfahrens vorgesehen werden, dass das Abrichten der einzelnen Schneckengänge erfolgt, indem in den einzelnen Schneckengängen unterschiedliche Achsabstände zwischen der Schleifschnecke und dem scheibenförmigen Abrichtwerkzeug gewählt werden, wobei dann beim Abrichten der einzelnen Schneckengänge unterschiedliche Schwenkwinkel zwischen der Drehachse der Schleifschnecke und der Drehachse des scheibenförmigen Abrichtwerkzeugs verwendet werden. Die genannten Achsen sind dabei dann windschief zueinander ausgerichtet (d. h. die Achsen sind nicht parallel und schneiden sich auch nicht). Der relative Schwenkwinkel wird entsprechend von Schneckengang zu Schneckengang variiert, und zwar bei geändertem radialen Abstand zwischen Schleifschnecke und Abrichtrad. Hiermit kann die Oberflächenstruktur der Flanken der Schneckengänge gezielt beeinflusst werden, da beim Abrichten von Schneckengang zu Schneckengang andere Eingriffsverhältnisse vorliegen.

Eine Fortbildung sieht vor, dass über die axiale Erstreckung der Schleifschnecke mindestens zwei axial aneinander angrenzende Abschnitte profiliert werden, wobei sich die Flankenkonturen in den axial aneinander angrenzenden Abschnitten in einem Schneckengang geometrisch und/oder in ihrer Oberflächenstruktur voneinander unterscheiden.

Das vorgeschlagene Verfahren zum Schleifen eines Werkstücks, das über seinen Umfang eine Anzahl Zähne oder zahnförmige Vorsprünge aufweist, mit einer Schleifschnecke mit einer Anzahl Schneckengängen, bei dem das oben beschriebene Abrichtverfahren zum Einsatz kommt, zeichnet sich dadurch aus, dass das Verhältnis zwischen der Anzahl der Zähne oder der zahnförmigen Vorsprünge und der Anzahl der Schneckengänge nicht ganzzahlig gewählt wird.

Hiermit wird der Effekt erreicht, dass beim Einsatz der mehrgängigen Wälzschnecke bei der Schleifbearbeitung eines Zahnrads oder eines ähnlichen Werkstücks jeder Gang der Schleifschnecke mehrfach mit jeder Zahnlücke in Eingriff kommt. Bei gegebenem Werkstück wird die Gangzahl der Schleifschnecken entsprechend gewählt. Die Zähnezahl des Werkstück geteilt durch die Anzahl der Schneckengänge darf dann also nicht ganzzahlig sein.

Die vorgeschlagene mehrgängige Schleifschnecke zum Schleifen eines Zahnrads oder Rotors mit einem zahnförmigen Profil zeichnet sich dadurch aus, dass mindestens zwei Schneckengänge Flankenkonturen aufweisen, die sich geometrisch und/oder in ihrer Oberflächenstruktur voneinander unterscheiden, wobei die gesamte Flankenkontur aus mehreren radialen Abschnitten besteht und wobei die einzelnen radialen Abschnitte in mindestens zwei Schneckengängen radial versetzt zueinander angeordnet sind.

Bevorzugt zeichnet sich die Schleifschnecke dadurch aus, dass über die axiale Erstreckung der Schleifschnecke mindestens zwei axial aneinander angrenzende Abschnitte vorhanden sind, wobei sich die Flankenkonturen in den axial aneinander angrenzenden Abschnitten in einem Schneckengang geometrisch und/oder in ihrer Oberflächenstruktur voneinander unterscheiden.

Das vorgeschlagene Verfahren bzw. die vorgeschlagene Schleifschnecke kann bei der Hartfeinbearbeitung von Verzahnungen und Sonderprofilen (wie z. B. Rotoren oder Zykloiden) eingesetzt werden.

Das Verfahren kann sowohl bei topologischem Abrichten als auch bei Vollformabrichten eingesetzt werden.

Die Erfindung geht also im Vergleich mit dem Stand der Technik den umgekehrten Weg: Die einzelnen Schneckengänge der Schleifschnecke werden gezielt unterschiedlich abgerichtet, um unterschiedliche Oberflächenstrukturen bzw. Geometrien zu erhalten.

Die Erfindung sieht also vor, dass die Schleifschnecke jedenfalls abschnittsweise, d. h. über einen definierten axialen Abschnitt, sozusagen an einer definierten Axialposition, so abgerichtet wird, dass in besagtem Abschnitt bzw. an besagter Axialposition in verschiedenen Gängen eine unterschiedliche Profilgeometrie bzw. Oberflächenstruktur vorliegt.

Über der axialen Erstreckung der Schleifschnecke kann sich in einem Schneckengang die Profilgeometrie bzw. Oberflächenstruktur verändern. Dann können unterschiedlich profilierten Axialbereichen der Schleifschnecke beim Schleifen unterschiedliche Axialbereiche des Werkstücks zugeordnet werden, um am Werkstück gezielte Profilmodifikationen zu erzeugen. Hinsichtlich dieses Verfahrens wird auf die DE 695 26 851 T2 ausdrücklich Bezug genommen, wo diese Vorgehensweise detailliert beschrieben ist.

Wenn beim Schleifen eines Werkstücks dann jeder Schneckengang des Werkzeuges mehrfach mit jeder Werkstücklücke kämmt, werden die einzelnen Schneckengänge komplett auf das Werkstück übertragen. Hierdurch können die Oberflächenstruktur und die Geometrie des Werkstückes beeinflusst werden.

Das Abrichten der Schleifschnecke kann so in kürzerer Zeit erfolgen und/oder die Bearbeitungsqualität des Werkstücks kann so erhöht werden.

Mit dem vorgeschlagenen Verfahren können verschiedene Zielsetzung erreicht werden:
Zunächst kann eine Erhöhung des Überdeckungsgrades beim topologischen Abrichten erzielt werden.

Beim topologischen Abrichten besteht - wie oben erwähnt - quasi eine Punktberührung zwischen Abrichtwerkzeug und der Schneckengangflanke der abzurichtenden Wälzschnecke. Das gewünschte Profil wird durch das Abrichten von einzelnen "Spuren" bzw. "Linien" auf das Werkzeug aufgebracht. Der Abstand der genannten "Spuren" bzw. "Linien" ist entscheidend für das nachfolgende Schleifergebnis. Entspricht der Abstand der einzelnen Spuren der Wirkbreite (bzw. Wirkhöhe) des Abrichtwerkzeuges, ergibt sich ein Überdeckungsgrad von 1. Dies entspricht theoretisch der kleinstmöglichen Überdeckung und somit einem Abrichten mit der geringsten Anzahl von Einzelspuren. Aus Qualitätsgründen wird allerdings in der Praxis ein wesentlich höherer Überdeckungsgrad gewählt, was entsprechend eine längere Abrichtzeit bedingt.

Wie oben erläutert, besteht in diesem Zusammenhang das Erfindungskonzept darin, die genannten Spuren radial versetzt auf die verschiedenen Schneckengänge der Schleifschnecke aufzubringen und somit einen theoretisch höheren Überdeckungsgrad zu erreichen.

Ein weiterer Vorteil des vorgeschlagenen Verfahrens ist die Möglichkeit der Strukturbeeinflussung.

Jeder einzelne Schneckengang wird hierbei beispielsweise mit einem geringfügig anderen Achsabstand zwischen Abrichtwerkzeug und Schleifschnecke abgerichtet. Die sich dadurch ändernde Geometrie der einzelnen Gänge wird durch eine Korrektur des Schwenkwinkels der Achsen von Abrichtrad und Schleifschnecke beim Abrichten korrigiert, so dass von der Geometrie her alle Flankenkonturen zwar gleich sind, diese sich aber in ihrer Oberflächenstruktur unterscheiden.

Das Ziel ist hierbei, eine gebrochene Oberflächenstruktur beim Schleifen zu erhalten, welche sich positiv auf das Geräuschverhalten des Werkstückes im späteren Betrieb, beispielsweise in einem Getriebe, auswirkt.

Ferner kann eine Geometriebeeinflussung angestrebt werden.

Werden die einzelnen Schneckengänge in ihrer Geometrie unterschiedlich abgerichtet, ist es möglich, hierdurch die Geometrie des Werkstückes beim Schleifen zu beeinflussen, wozu eine Shiftbewegung (Bewegung in Richtung der Drehachse der Schleifschnecke) beim Schleifen erfolgt.

In den Zeichnungen ist ein Ausführungsbeispiel der Erfindung dargestellt. Es zeigen:
- Fig. 1: schematisch eine dreigängige Schleifschnecke in der Seitenansicht, die von einem Abrichtwerkzeug abgerichtet wird,
- Fig. 2: einen teilweisen Radialschnitt der Schleifschnecke gemäß Fig. 1, wobei die Art des Abrichtens gemäß dem Stand der Technik illustriert ist,
- Fig. 3: einen teilweisen Radialschnitt der Schleifschnecke gemäß Fig. 1, wobei eine erfindungsgemäße Art des Abrichtens illustriert ist,
- Fig. 4: drei benachbarte Flanken der Schleifschnecke gemäß Fig. 3 in vergrößerter Darstellung, und
- Fig. 5: schematisch eine Schleifschnecke in der Seitenansicht, wobei mehrere axiale Bereiche der Schleifschnecke markiert sind.

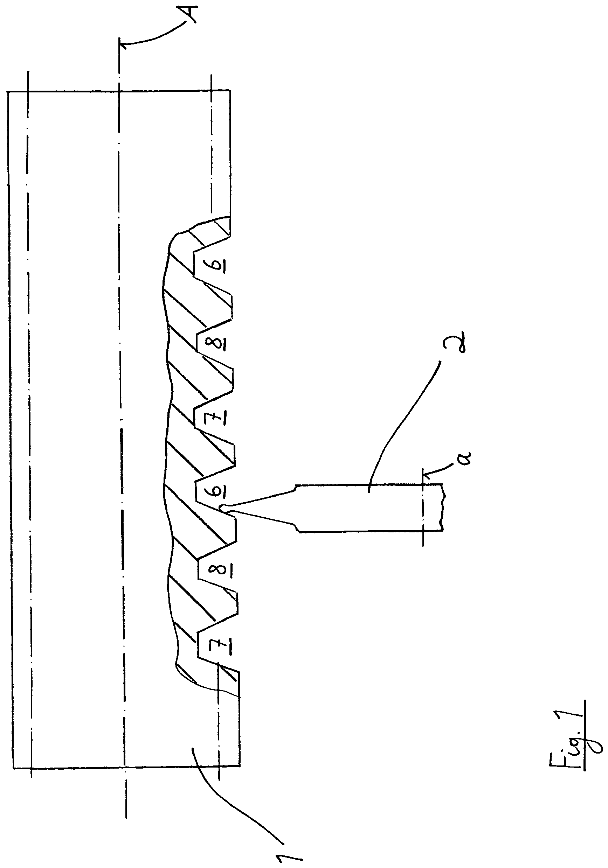

In Fig. 1 ist zunächst generell zu sehen, wie eine Schleifschnecke 1 mittels eines Abrichtwerkzeugs 2 abgerichtet wird. Das Abrichtwerkzeug ist hier als Abrichtrad ausgebildet, das beim Abrichten um eine Drehachse a rotiert. Die Schleifschnecke 1 rotiert beim Abrichten um ihre Drehachse A.

Die Schleifschnecke 1 ist vorliegend dreigängig ausgebildet, d. h. drei Schneckengänge 6, 7 und 8 verlaufen wendelförmig parallel nebeneinander um die Drehachse A.

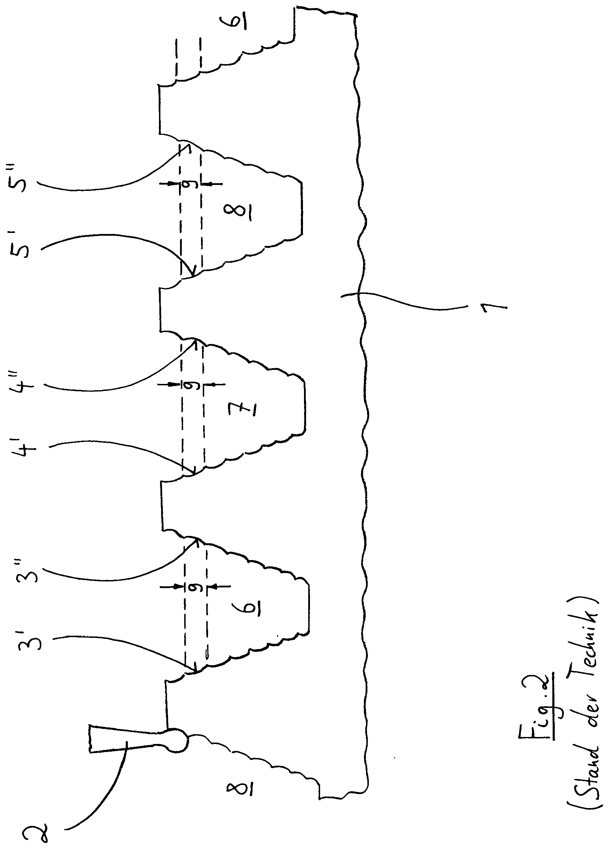

Der Abrichtprozess, wie er im Stand der Technik üblich ist, ist in Fig. 2 illustriert. Hier ist zu erkennen, dass das Abrichtwerkzeug 2 mit seiner Schneidfläche linienweise bzw. zeilenweise auf einem definierten Radius in Achsrichtung geführt wird, um die Flankenkonturen 3' und 3" des Schneckengangs 6, die Flankenkonturen 4' und 4" des Schneckengangs 7 und die Flankenkonturen 5' und 5" des Schneckengangs 8 nacheinander herzustellen (topologisches Abrichten). Das Abrichtwerkzeug 2 schneidet dabei in jeder Linie bzw. Zeile einen radialen Abschnitt 9 in die Flanke ein. Nachdem eine Zeile abgerichtet ist, wird das Schleifwerkzeug 2 relativ zur Schleifschnecke 1 radial zugestellt, und zwar um einen Betrag, der beispielsweise der radialen Höhe des radialen Abschnitts 9 entspricht.

Demgemäß zeichnet sich eine Schleifschnecke gemäß dem Stand der Technik dadurch aus, dass alle Abricht-Linien in allen Schneckengängen 6, 7, 8 auf demselben Radius liegen, was in Fig. 2 mit den waagrechten gestrichelten Linien angedeutet ist.

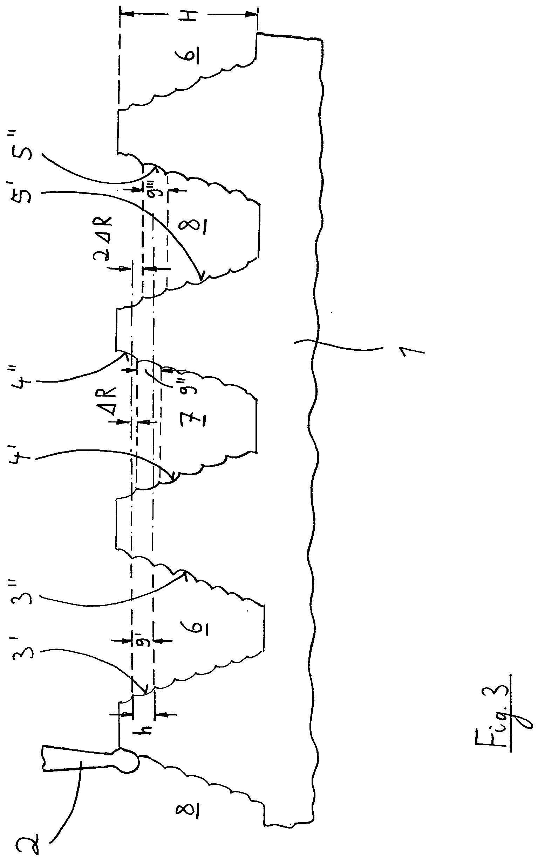

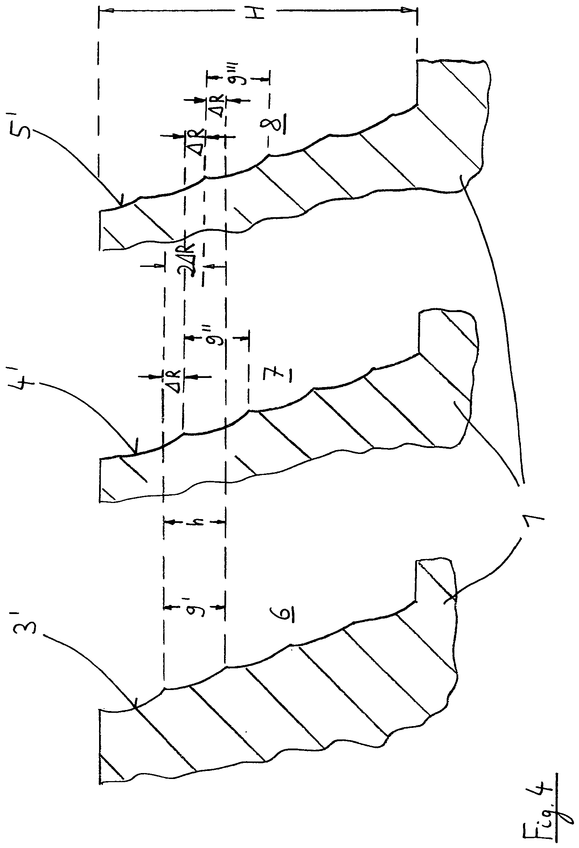

Demgegenüber zeigt Fig. 3 und in vergrößerter Darstellung korrespondierend Fig. 4 (für die drei Flankenkonturen 3', 4' und 5' aus Fig. 3) eine andere Vorgehensweise, wie es sich beim Einsatz der vorliegende Erfindung hier im konkreten Ausführungsbeispiel ergibt:
Wiederum wird zeilenweise bzw. linienweise abgerichtet (topologisches Abrichten). Für den ersten Schneckengang 5 erfolgt dies wie für den Schneckengang 5 im Falle von Fig. 2. Das Abrichtwerkzeug 2 hinterlässt ihr Profil auf der Flankenkontur 3' für einen radialen Abschnitt 9'. Dieser radiale Abschnitt 9' entspricht im wesentlichen der radialen Höhe h des Schneidbereichs des Abrichtwerkzeugs 2. Demgemäß ist sofort ersichtlich, dass eine Anzahl von Abrichthüben (Zeilen) nötig ist, um mit der radialen Höhe h des Schneidbereichs des Abrichtwerkzeugs 2 die gesamte radiale Höhe H der Flankenkontur 3, 4, 5 abzudecken.

Der sich anschließende Schneckengang 7 bzw. die Flankenkontur 4' wird allerdings nicht mit demselben radialen Abstand zwischen Abrichtwerkzeug 2 und Schleifschnecke 1 abgerichtet, sondern der radiale Abstand ist um einen radialen Versatz ΔR verringert. Die Flankenkontur 4' ist folglich geometrisch zur Flankenkontur 3' verändert.

Entsprechend wird beim Abrichten der Flankenkontur 5' vorgegangen. Wiederum wurde hier der radiale Abstand zwischen Abrichtwerkzeug 2 und Schleifschnecke 1 um den radialen Versatz ΔR vermindert, weshalb die entsprechende "Linie" relativ zu derjenigen des ersten Schneckengangs 6 um 2 ΔR radial verlagert ist.

Demgemäß sind die radialen Abschnitte 9', 9" und 9''' der drei aufeinander folgenden Schneckengänge 6, 7 und 8 jeweils um den radialen Versatz ΔR zueinander versetzt.

Wie in Fig. 4 zu erkennen ist, sind die radialen Versätze ΔR von Schneckengang zu Schneckengang gleichmäßig (äquidistant) gewählt. Vorliegend beträgt der radiale Versatz ΔR ein Drittel des radialen Abschnitts 9', 9" bzw. 9''' oder der radialen Höhe h des Schneidbereichs des Abrichtwerkzeugs 2.

Wird beim Schleifen die Anzahl der Schneckengänge so gewählt, dass der Quotient aus der Anzahl der Zähne des Zahnrads (z_{W}) und der Anzahl der Schneckengänge (z_{S}) der Schleifschnecke nicht ganzzahlig ist, gelangen alle Zähne des Zahnrads beim Schleifen nach und nach in alle Schneckengänge, weshalb eine Vergleichmäßigung des Schliffbildes erreicht wird.

Dies ergibt sich dadurch, dass die "Spitzen" auf den Flanken, die in Fig. 4 stark übertrieben dargestellt sind, beim Schleifen des Zahnrads in ihrer Auswirkung vermindert werden.

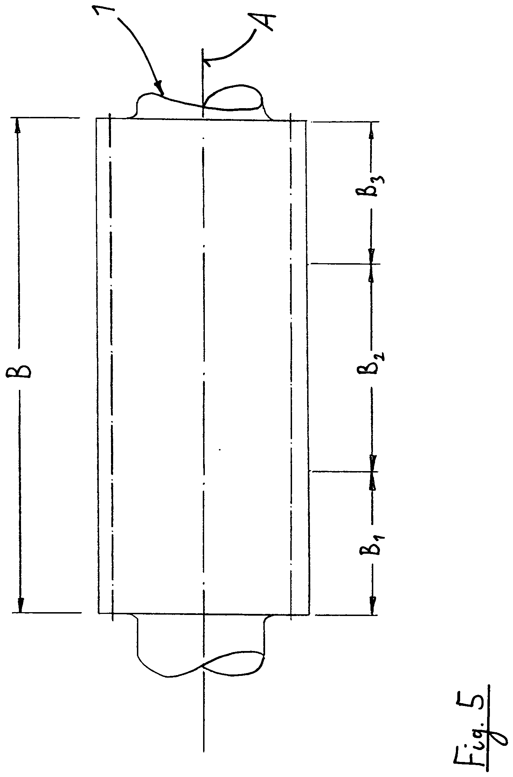

In Fig. 5 ist schematisch angedeutet, dass die Schleifschnecke 1 insgesamt eine axiale Erstreckung B aufweist, die sich in drei axiale Abschnitte aufteilt, nämlich in einen ersten axialen Abschnitt B₁, einen zweiten axialen Abschnitt B₂ und einen dritten axialen Abschnitt B₃. In den drei axialen Abschnitten B₁, B₂ und B₃ ist die Profilierung von Schneckengang zu Schneckengang - wie erläutert - nicht nur mit einem radialen Versatz ΔR versehen, sondern die Profilierung der Flankenkontur unterscheidet sich auch innerhalb eines Schneckengangs über die axiale Erstreckung der Schleifschnecke 1. Hiermit wird es möglich, Profilmodifikationen der zu schleifenden Verzahnung zu erzeugen, indem den verschiedenen axialen Abschnitten B₁, B₂, B₃ beim Schleifen einer Verzahnung unterschiedliche Breitenbereiche des Werkstücks zugeordnet werden.

### Bezugszeichenliste:

- 1: Schleifschnecke
- 2: Abrichtwerkzeug
- 3', 3": Flankenkontur
- 4', 4": Flankenkontur
- 5', 5": Flankenkontur
- 6: Schneckengang
- 7: Schneckengang
- 8: Schneckengang
- 9: radialer Abschnitt
- 9': radialer Abschnitt
- 9": radialer Abschnitt
- 9"': radialer Abschnitt

- h: radiale Höhe des Schneidbereichs
- H: radiale Höhe der Flankenkontur
- ΔR: radialer Versatz
- a: Drehachse des Abrichtwerkzeugs
- A: Drehachse der Schleifschnecke
- z_{W}: Anzahl der Zähne oder zahnförmigen Vorsprünge
- z_{S}: Anzahl der Schneckengänge
- B: axiale Erstreckung der Schleifschnecke
- B₁: erster axialer Abschnitt der Schleifschnecke
- B₂: zweiter axialer Abschnitt der Schleifschnecke
- B₃: dritter axialer Abschnitt der Schleifschnecke

## Patentansprüche

1. Verfahren zum Abrichten einer mehrgängigen Schleifschnecke (1), bei dem mittels eines Abrichtwerkzeugs (2) die Flankenkontur (3', 3", 4', 4", 5', 5") der wendelförmig parallel nebeneinander verlaufenden Schneckengänge (6, 7, 8) hergestellt wird,
**dadurch gekennzeichnet, dass**
in mindestens zwei Schneckengängen (6, 7, 8) Flankenkonturen (3', 3", 4', 4", 5', 5") hergestellt werden, die sich geometrisch und/oder in ihrer Oberflächenstruktur voneinander unterscheiden,
wobei das Abrichten mit einem Abrichtwerkzeug (2) durchgeführt wird, dessen Schneidbereich sich nur über einen Teil (h) der gesamten radialen Höhe (H) der Flankenkontur (3', 3", 4', 4", 5', 5") erstreckt, wobei die gesamte Flankenkontur (3', 3", 4', 4", 5', 5") in mehreren Abricht-Teilvorgängen hergestellt wird, mit denen jeweils unterschiedliche radiale Abschnitte (9', 9", 9"') der Flankenkontur (3', 3", 4', 4", 5', 5") hergestellt werden, wobei die einzelnen radialen Abschnitte (9', 9", 9"') in mindestens zwei Schneckengängen (6, 7, 8) radial versetzt (ΔR) zueinander angeordnet werden.

2. Verfahren nach Anspruch 1, **dadurch gekennzeichnet, dass** in allen Schneckengängen (6, 7, 8) Flankenkonturen (3', 3", 4', 4", 5', 5") hergestellt werden, die sich geometrisch und/oder in ihrer Oberflächenstruktur voneinander unterscheiden.

3. Verfahren nach Anspruch 1 oder 2, **dadurch gekennzeichnet, dass** ein Abricht-Teilvorgang erfolgt, indem bei konstantem radialen Abstand zwischen Schleifschnecke (1) und Abrichtwerkzeug (2) eine relative axiale Bewegung zwischen Schleifschnecke (1) und Abrichtwerkzeug (2) gefahren wird.

4. Verfahren nach einer der Ansprüche 1 bis 3, **dadurch gekennzeichnet, dass** der radiale Versatz (ΔR) zwischen den einzelnen radialen Abschnitten (9', 9", 9''') in den einzelnen Schneckengängen (6, 7, 8) äquidistant verteilt ist.

5. Verfahren nach einem der Ansprüche 1 bis 4, **dadurch gekennzeichnet, dass** das Abrichten unter Verwendung eines scheibenförmigen Abrichtwerkzeugs (2) erfolgt, das während des Abrichtvorgangs um eine Drehachse (a) rotiert.

6. Verfahren nach Anspruch 5, **dadurch gekennzeichnet, dass** das Abrichten der einzelnen Schneckengänge (6, 7, 8) erfolgt, indem in den einzelnen Schneckengängen (6, 7, 8) unterschiedliche Achsabstände zwischen der Schleifschnecke (1) und dem scheibenförmigen Abrichtwerkzeug (2) gewählt werden, wobei dann beim Abrichten der einzelnen Schneckengänge (6, 7, 8) unterschiedliche Schwenkwinkel zwischen der Drehachse (A) der Schleifschnecke (1) und der Drehachse (a) des scheibenförmigen Abrichtwerkzeugs (2) verwendet werden.

7. Verfahren nach einem der Ansprüche 1 bis 6, **dadurch gekennzeichnet, dass** über die axiale Erstreckung (B) der Schleifschnecke (1) mindestens zwei axial aneinander angrenzende Abschnitte (B₁, B₂, B₃) profiliert werden, wobei sich die Flankenkonturen (3', 3", 4', 4", 5', 5") in den axial aneinander angrenzenden Abschnitten (B₁, B₂, B₃) in einem Schneckengang (6, 7, 8) geometrisch und/oder in ihrer Oberflächenstruktur voneinander unterscheiden.

8. Schleifschnecke (1) zum Schleifen eines Zahnrads oder Rotors mit einem zahnförmigen Profil, wobei die Schleifschnecke (1) mehrere wendelförmig parallel nebeneinander verlaufende Schneckengänge (6, 7, 8) aufweist,
**dadurch gekennzeichnet, dass**
mindestens zwei Schneckengänge (6, 7, 8) Flankenkonturen (3', 3", 4', 4", 5', 5") aufweisen, die sich geometrisch und/oder in ihrer Oberflächenstruktur voneinander unterscheiden, wobei die gesamte Flankenkontur (3', 3", 4', 4", 5', 5") aus mehreren radialen Abschnitten (9', 9", 9'") besteht und wobei die einzelnen radialen Abschnitte (9', 9", 9"') in mindestens zwei Schneckengängen (6, 7, 8) radial versetzt (ΔR) zueinander angeordnet sind.

9. Schleifschnecke nach Anspruch 8 **dadurch gekennzeichnet, dass** über
die axiale Erstreckung (B) der Schleifschnecke (1) mindestens zwei axial aneinander angrenzende Abschnitte (B₁, B₂, B₃) vorhanden sind, wobei sich die Flankenkonturen (3', 3", 4', 4", 5', 5") in den axial aneinander angrenzenden Abschnitten (B₁, B₂, B₃) in einem Schneckengang (6, 7, 8) geometrisch und/oder in ihrer Oberflächenstruktur voneinander unterscheiden.

10. Verfahren zum Schleifen eines Werkstücks, das über seinen Umfang eine Anzahl (z_{W}) Zähne oder zahnförmige Vorsprünge aufweist, mit einer Schleifschnecke (1) gemäss einem der Ansprüche 8 oder 9, mit einer Anzahl (z_{S}) Schneckengängen (6, 7, 8), wobei die Schleifschnecke (1) mit dem Verfahren nach einem der Ansprüche 1 bis 7 abgerichtet wird,
**dadurch gekennzeichnet, dass**
das Verhältnis zwischen der Anzahl (z_{W}) der Zähne oder der zahnförmigen Vorsprünge und der Anzahl (z_{S}) der Schneckengänge (6, 7, 8) nicht ganzzahlig gewählt wird.

## Claims

1. Method for dressing of a multiple thread grinding worm (1), in which the contour of the flanks (3', 3 ", 4', 4", 5', 5 ") of the screw channels (6, 7, 8) which are running spiral-like and parallel to another is produced by a dressing tool (2),
**characterized in that**
in at least two screw channels (6, 7, 8) contours of the flanks (3', 3", 4', 4", 5', 5") are produced, which are distinguished from another by their geometry and/or by their surface structure,
wherein the dressing is carried out with a dressing tool (2) which cutting region extends only along a part (h) of the total radial height (H) of the contour of the flank (3', 3", 4', 4", 5', 5"), wherein the whole contour of the flank (3', 3", 4', 4", 5', 5 ") is produced in several dressing steps, by which different radial sections (9', 9", 9"') of the contour of the flank (3', 3", 4', 4", 5', 5") are produced, wherein the individual radial sections (9', 9", 9"') are arranged radially displaced (ΔR) to each other in at least two screw channels (6, 7, 8).

2. Method according to claim 1, **characterized in that** in all screw channels (6, 7, 8) contours of the flanks (3', 3", 4', 4", 5', 5") are produced, which are distinguished from another by their geometry and/or by their surface structure.

3. Method according to claim 1 or 2, **characterized in that** a part of a dressing process occurs, in which a relative axial movement between the grinding worm (1) and dressing tool (2) is driven at a constant radial distance between the grinding worm (1) and dressing tool (2).

4. Method according to one of claims 1 to 3, **characterized in that** the radial offset (ΔR) between the individual radial sections (9', 9", 9"') within the screw channels (6, 7, 8) are allocated equally distanced.

5. Method according to claim 1 to 4, **characterized in that** a disc-shaped dressing tool (2) is used for dressing, which rotates around an axis of rotation (a) during the dressing process.

6. Method according to claim 5, **characterized in that** the dressing of the individual screw channels (6, 7, 8) occurs by choosing different distances in the individual screw channels (6, 7, 8) between the axes of the grinding worm (1) and the disc-shaped dressing tool (2), wherein then during dressing of the individual screw channels (6, 7, 8) different pivoting angles are used between the axis of rotation (A) of the grinding worm (1) and the axis of rotation (a) of the dressing tool (2).

7. Method according to one of claims 1 to 6, **characterized in that** at least two axial sections (B₁, B₂, B₃) adjoining to another are profiled along the axial extension (B) of the grinding worm (1), wherein the contours of the flanks (3', 3", 4', 4", 5', 5") in the axial adjoining sections (B₁, B₂, B₃) in a screw channel (6, 7, 8) are distinguished from another by their geometry and/or by their surface structure.

8. Grinding worm (1) for grinding of a gear or a rotor with a teeth-like profile, wherein the grinding worm (1) comprises several screw channels (6, 7, 8) which are running spiral-like and parallel to another,
**characterized in**
**that** at least two screw channels (6, 7, 8) have contours of the flanks (3', 3", 4', 4", 5', 5") which are distinguished from another by their geometry and/or by their surface structure, wherein the whole contour of the flank (3', 3", 4', 4", 5', 5") consist of several radial sections (9', 9", 9"') and wherein the individual radial sections (9', 9", 9"') are arranged radially displaced (ΔR) to each other in at least two screw channels (6, 7, 8).

9. Grinding worm according claim 8, **characterized in that** at least two axial sections (B₁, B₂, B₃) adjoining to another are arranged along the axial extension (B) of the grinding worm (1), wherein the contours of the flanks (3', 3", 4', 4", 5', 5") in the axial adjoining sections (B₁, B₂, B₃) in a screw channel (6, 7, 8) are distinguished from another by their geometry and/or by their surface structure.

10. Method for grinding of a work piece which has a number (z_{W}) of teeth or teeth-like protrusions along its circumference with a grinding worm (1) according to one of claims 8 or 9 with a number (z_{S}) of screw channels (6, 7, 8), wherein the grinding worm (1) is dressed according to the method of one of claims 1 to 7,
**characterized in**
**that** the ratio between the number (z_{W}) of teeth or teeth-like protrusions and the number (z_{S}) of screw channels (6, 7, 8) is chosen to be not in whole numbers.

## Revendications

1. Procédé pour le dressage d'une meule à vis sans fin à plusieurs pas (1), dans lequel le contour des flancs (3', 3", 4', 4", 5', 5") des pas de vis sans fin (6, 7, 8) s'étendant parallèlement les uns à côté des autres en forme d'hélice est produit au moyen d'un outil de dressage (2), **caractérisé en ce que**
des contours des flancs (3', 3", 4', 4", 5', 5") sont fabriqués dans au moins deux pas de vis sans fin (6, 7, 8), lesquels se distinguent les uns des autres de par leur géométrie et/ou leur structure de surface,
le dressage étant réalisé avec un outil de dressage (2) dont la zone de coupe s'étend seulement sur une partie (h) de toute la hauteur radiale (H) du contour des flancs (3', 3", 4', 4", 5', 5"), le contour total des flancs (3', 3", 4', 4", 5', 5") étant fabriqué dans plusieurs opérations de dressage partielles avec lesquelles à chaque fois des portions radiales différentes (9', 9", 9''') du contour des flancs (3', 3", 4', 4", 5', 5") sont fabriquées, les portions radiales individuelles (9', 9", 9''') étant disposées de manière décalée radialement (ΔR) les unes par rapport aux autres dans au moins deux pas de vis sans fin (6, 7, 8).

2. Procédé selon la revendication 1, **caractérisé en ce que** l'on fabrique dans tous les pas de vis sans fin (6, 7, 8), des contours des flancs (3', 3", 4', 4", 5', 5") qui se distinguent les uns des autres de par leur géométrie et/ou leur structure de surface.

3. Procédé selon la revendication 1 ou 2, **caractérisé en ce qu'**une opération de dressage partielle a lieu en effectuant un déplacement axial relatif entre la meule à vis sans fin (1) et l'outil de dressage (2) en maintenant constante la distance radiale entre la meule à vis sans fin (1) et l'outil de dressage (2).

4. Procédé selon l'une quelconque des revendications 1 à 3, **caractérisé en ce que** le décalage radial (ΔR) entre les portions radiales individuelles (9', 9", 9''') est réparti de manière équidistante dans les pas de vis sans fin individuels (6, 7, 8).

5. Procédé selon l'une quelconque des revendications 1 à 4, **caractérisé en ce que** le dressage s'effectue en utilisant un outil de dressage en forme de disque (2) qui tourne autour d'un d'axe de rotation (a) pendant l'opération de dressage.

6. Procédé selon la revendication 5, **caractérisé en ce que** le dressage des pas de vis sans fin individuels (6, 7, 8) s'effectue en choisissant dans les pas de vis sans fin individuels (6, 7, 8) des distances entre axes différentes entre la meule à vis sans fin (1) et l'outil de dressage en forme de disque (2), des angles de pivotement différents entre l'axe de rotation (A) de la meule à vis sans fin (1) et l'axe de rotation (a) de l'outil de dressage en forme de disque (2) étant utilisés lors du dressage des pas de vis sans fin individuels (6, 7, 8).

7. Procédé selon l'une quelconque des revendications 1 à 6, **caractérisé en ce qu'**au moins deux portions adjacentes axialement (B₁, B₂, B₃) sont profilées sur l'étendue axiale (B) de la meule à vis sans fin (1), les contours des flancs (3', 3", 4', 4', 5', 5") dans les portions adjacentes axialement (B₁, B₂, B₃) dans un pas de vis sans fin (6, 7, 8) se distinguant les uns des autres de par leur géométrie et/ou leur structure de surface.

8. Meule à vis sans fin (1) pour meuler une roue dentée ou un rotor comprenant un profil de forme denté, la meule à vis sans fin (1) présentant plusieurs pas de vis sans fin (6, 7, 8) s'étendant parallèlement les uns à côté des autres en forme d'hélice,
**caractérisée en ce**
**qu'**au moins deux pas de vis sans fin (6, 7, 8) présentent des contours de flancs (3', 3", 4', 4'', 5', 5") qui se distinguent les uns des autres de par leur géométrie et/ou leur structure de surface, le contour total des flancs (3', 3", 4', 4", 5', 5") se composant de plusieurs portions radiales (9', 9'', 9''') et les portions radiales individuelles (9', 9", 9") étant disposées de manière décalée radialement (ΔR) les unes par rapport aux autres dans au moins deux pas de vis sans fin (6, 7, 8).

9. Meule à vis sans fin selon la revendication 8, **caractérisée en ce qu'**au moins deux portions adjacentes axialement (B₁, B₂, B₃) sont prévues sur l'étendue axiale (B) de la meule à vis sans fin (1), les contours des flancs (3', 3", 4', 4", 5', 5") dans les portions adjacentes axialement (B₁, B₂, B₃) dans un pas de vis sans fin (6, 7, 8) se distinguant les uns des autres de par leur géométrie et/ou leur structure de surface.

10. Procédé pour le dressage d'une pièce qui présente sur sa périphérie une pluralité (z_{W}) de dents ou de saillies en forme de dents, comprenant une meule à vis sans fin (1) selon l'une quelconque des revendications 8 ou 9, avec une pluralité (z_{S}) de pas de vis sans fin (6, 7, 8), la meule à vis sans fin (1) étant dressée au moyen du procédé selon l'une quelconque des revendications 1 à 7,
**caractérisé en ce que**
le rapport entre la pluralité (z_{W}) des dents ou des saillies en forme de dents à la pluralité (z_{S}) des pas de vis sans fin (6, 7, 8) est choisi de manière à ne pas être un nombre entier.
